# EUROPÄISCHE PATENTSCHRIFT

(11) **EP 2 386 017 B1**
(45) Veröffentlichungstag und Bekanntmachung des Hinweises auf die Patenterteilung: **09.01.2013**
(21) Anmeldenummer: 09760798.0
(22) Anmeldetag: 16.11.2009
(51) Int. Cl.: F01N 3/20

(54) **TANK ZUR AUFNAHME EINER WÄSSRIGEN LÖSUNG**
RESERVOIR FOR ACCOMMODATING AN AQUEOUS SOLUTION
RÉSERVOIR POUR UNE SOLUTION AQUEUSE

(30) Priorität: 09.01.2009 DE 102009000094
(43) Veröffentlichungstag der Anmeldung: 16.11.2011
(73) Patentinhaber: Robert Bosch GmbH, 70442 Stuttgart (DE)
(72) Erfinder: HAEBERER, Rainer, 75015 Bretten (DE)
(86) Internationale Anmeldenummer: PCT/EP2009/065190
(87) Internationale Veröffentlichungsnummer: WO 2010/078991

(56) Entgegenhaltungen:
- EP-A- 1 645 452
- EP-A- 1 974 975
- WO-A-99/02825
- WO-A-2005/044611
- DE-A1- 19 841 021
- FR-A- 2 884 788
- JP-A- 2005 291 086

## Beschreibung

### Stand der Technik

DE 101 39 139 A1 bezieht sich auf ein Dosiersystem zur Dosierung eines Reduktionsmittels für eine Abgasnachbehandlung. Bei dem Reduktionsmittel handelt es sich insbesondere um Harnstoff bzw. eine wässrige Harnstofflösung. Diese dient der Reduktion von den in dem Abgas einer Brennkraftmaschine enthaltenen Stickoxiden. Es ist eine Fördereinrichtung zur Beförderung des Reduktionsmittels von einem Vorratsbehälter zu einem das Abgas führenden Abgasrohr vorgesehen. Des Weiteren umfasst die Vorrichtung zur Dosierung eine Zumesseinrichtung zur dosierten Zufuhr des Reduktionsmittels in das Abgasrohr, wobei die Fördereinrichtung eine Pumpe und die Zumesseinrichtung ein Dosierventil mit einem Austrittselement enthält. Die Zumesseinrichtung ist eingerichtet zur Befestigung nahe oder am Abgasrohr, so dass das Austrittselement in das Abgasrohr hineinragen kann und die Fördereinrichtung derart eingerichtet ist, dass diese am oder im Vorratsbehälter befestigt ist. Die Fördereinrichtung und die Zumesseinrichtung bilden voneinander getrennte, über eine Verbindungsleitung verbundene Module.

Die EP 1645452 beschreibt einen in einen Kraftstofftank eines Kraftfahrzeugs eingefügten Harnstofftank.

DE 10 2004 051 746 A1 bezieht sich auf ein Tankmodul für ein Reduktionsmittel und ein Dosiersystem. Gemäß dieser Lösung ist ein Tankmodulgehäuse vorgesehen, wobei innerhalb einer Tankkammer des Tankmodulgehäuses ein Dosiersystem zur Dosierung eines Reduktionsmittels in ein Abgassystem angeordnet ist. Das Dosiersystem ist gemäß dieser Lösung als ein kompaktes Einbaumodul ausgestaltet.

DE 10 2006 027 487 A1 betrifft einen Fahrzeugtank für ein flüssiges Reduktionsmittel, insbesondere für eine Harnstofflösung. Der Fahrzeugtank zur Aufnahme einer wässrigen Harnstofflösung zur Reduktion von Stickoxiden im Abgas von

Brennkraftmaschinen ist aus Kunststoff gefertigt. Der Fahrzeugtank weist in vorteilhafter Weise eine Funktionseinheit auf, die mindestens eine Pumpe, mindestens ein Druckregelventil, mindestens einen Innenbehälter mit integrierter elektrischer Heizung sowie mindestens eine Saugleitung umfasst. Die Funktionseinheit ist in vorteilhafter Weise in einer Öffnung im Tank eingesetzt und dichtet diesen deckelartig ab.

Das Reduktionsmittel wird von einer Pumpe, die das Fördermodul darstellt, in einer Leitung vom Tank zum Dosiermodul transportiert. Eine Druckregelung erfolgt stellerseitig über die Drehzahl des Pumpenmotors und im Rückkopplungszweig über einen Drucksensor. Eine permanente Rückströmdrossel in der Nähe des Druckerzeugers verleiht dem hydraulischen System eine hohe regelungstechnische Druckstabilität. Um eine mögliche Schädigung des Systems beim Gefrieren auszuschließen, wird das System beim Abstellen des Motors durch ein Umpolen der Förderpumpe bei gleichzeitigem Öffnen des Dosiermoduls zum Abgas hin belüftet. Beim Gefrieren dehnt sich das Reduktionsmittel um ca. 10 % seines Volumens aus.

Der das Reduktionsmittel bevorratende Tank beinhaltet einen Schwapptopf, in dessen unterem Bereich in der Regel ein elektrisches Heizelement positioniert ist. Um in einer akzeptablen Zeit mit einer minimalen Heizleistung bei tiefen Außentemperaturen eine Dosierbereitschaft darstellen zu können, beschränkt sich die Heizung auf den Bereich des Schwapptopfes. Dies wird dadurch erreicht, dass die Kunststoffwandung des Schwapptopfes quasi den Topfinhalt gegenüber dem Gesamttankinhalt isoliert. Die gesamte Heizenergie steht somit für das Auftauen des im Schwapptopf bevorrateten Reduktionsmittelvolumens zur Verfügung.

Um zwischen zwei Serviceintervallen mit einer Reduktionsmittel-Tankfüllung auszukommen, fasst der Reduktionsmitteltank in der Regel zwischen 20 und 30 Liter Reduktionsmittel. Somit hat der Fahrer keine Berührung mit dem Reduktionsmittel, die Wiederbefüllung des Tanks erfolgt beim Wartungsservice. Die Realisierung eines 30 Liter-Tanks für Reduktionsmittel innerhalb heutiger Karosserien ist jedoch hinsichtlich des zur Verfügung stehenden, immer knapper werdenden Bauraumes äußerst schwierig. Alle Tanks bzw. deren Geometrien sind stark projektbezogen, was eine hohe Vielfalt hinsichtlich der Tankform, der Form und der Größe des Schwapptopfes, der eingesetzten Heizungselemente sowie der Füllstandssensorik bedeutet. Die Tanks benötigen überdies individuelle thermische Isolierungen und Befestigungen. Dies geht einher mit einer sehr hohen Variantenvielfalt, was wiederum sehr hohe Kosten nach sich zieht.

Aufgrund stetig steigender Kraftstoffpreise und einer starken Forderung nach einer CO₂-Reduzierung wird in Zukunft eine Reduzierung des Kraftstoffverbrauches unverzichtbar sein. Da eine Entstickung des Abgases von Brennkraftmaschinen über eine wässrige Harnstofflösung als Reduktionsmittel eine optimale Auslegung der Brennkraftmaschine hinsichtlich des Kraftstoffverbrauches zulässt, wird das SCR-Verfahren (selektive katalytische Reduktion) eine hervorragende Rolle spielen. Aufgrund der für die CO₂-Reduzierung erforderlichen Kraftstoffverbrauchseinsparung wird nicht mehr toleriert, dass im Kraftfahrzeug permanent 30 Liter Reduktionsmittel transportiert werden. Die Konsequenz daraus wird sein, dass sich der Tank für das Reduktionsmittel drastisch verkleinern wird und ein Reduktionsmittelvolumen in der Größenordnung zwischen 2 Litern und 10 Litern aufnehmen wird und in Abständen von ca. 2000 bis 5000 km - je nach Betriebsbedingungen - vom Fahrer wiederzubefüllen ist. Die Betankung durch den Fahrer wird sich durchsetzen, insbesondere da heutzutage bereits eine Außenbetankung für die Wiederbefüllung des Reduktionsmitteltanks vorgesehen ist.

### Offenbarung der Erfindung

Der erfindungsgemäß vorgeschlagenen Lösung folgend, umfasst das Dosiersystems zum Einbringen von Reduktionsmittel in das Abgas einer Brennkraftmaschine einen Reduktionsmitteltank mit einem Aufnahmevolumen für das Reduktionsmittel beispielsweise zwischen 2 Litern und 10 Litern. Die Tankgeometrie bietet aufgrund ihres relativ geringen Fassungsvermögens einen höheren Freiheitsgrad hinsichtlich der Ausnutzung des geringen zur Verfügung stehenden Bauraumes durch ein Einheitssystem. Der Reduktionsmitteltank wird als Einheitstank ausgelegt, der unterschiedlichen Bauraumerfordemissen Rechnung tragend eingesetzt werden kann. Des Weiteren kann das eine hohe Zahl von Gleichteilen aufweisende System ein einheitlich konfiguriertes Heizungselement sowie eine einheitliche Füllstandssensorik umfassen. Im Falle einer Dimensionierung in der Größenordnung zwischen 2 Litern und 10 Litern sind keine Maßnahmen für das Schwappen des Reduktionsmittels innerhalb des Tankes mehr erforderlich, so dass der Schwapptopf entfallen kann und eine große Kostenersparnis dadurch erreichbar ist, dass einheitliche, mehrfach einsetzbare Komponenten Verwendung finden. Bevorzugt ist die Tankgeometrie des das Reduktionsmittel aufnehmenden kleinen Tanks so bemessen, dass dieser zylindrisch beschaffen ist, wobei die Zylinderhöhe den Zylinderdurchmesser übersteigt. Dabei ist der Einheitstank mit mindestens einer anderen Komponente kombiniert. So ergibt sich die Möglichkeit, den kleinen Einheitstank mit einer anderen fahrzeugspezifischen Komponente zu vereinen. Diese andere fahrzeugspezifische Komponente ist so zu verändern, dass der kleine Einheitstank in einem entsprechenden Bauraum aufgenommen werden kann. Mögliche fahrzeugspezifische Komponenten zur Integration des das Reduktionsmittel aufnehmenden kleinen Einheitstanks wären zum Beispiel der Waschwassertank oder auch der Kraftstofftank des Fahrzeugs. Besonders vorteilhaft ist es hierbei, den Kraftstofftank und den kleinen, das Reduktionsmittel aufnehmenden Einheitstank miteinander zu kombinieren, insbesondere, da die CO₂-Reduktion und die damit einhergehende Kraftstoffreduzierung eine Verkleinerung der derzeit eingesetzten Kraftstofftanks nach sich ziehen werden. Die Kombination des Kraftstofftanks mit einem das Reduktionsmittel aufnehmenden Einheitstank bietet die Möglichkeit, über den warmen Rücklauf aus dem Kraftstoffeinspritzsystem den kleiner dimensionierten, das Reduktionsmittel aufnehmenden Einheitstank zu beheizen und diesen demzufolge aufzutauen.

Der relativ kleinbauende Tank zur Aufnahme des Reduktionsmittels kann aufgrund seiner reduzierten Größe über ein kostengünstiges Kunststoffspritzgießverfahren oder auch ein Kunststoffschleuderverfahren hergestellt werden. Bisher eingesetzte, teure Kunststoffblasverfahren, die mit sehr hohen Werkzeugkosten einhergehen, sind nicht mehr erforderlich, so dass auch bei der Fertigung der Komponente Reduktionsmitteltank eine Kostenersparnis erreicht werden kann.

Alternativ zu einer Fertigung des das Reduktionsmittel aufnehmenden Einheitstanks kann aufgrund dessen geringen Volumens und der einfachen Form alternativ zum Kunststoffspritzverfahren bzw. Kunststoffschleuderverfahren der Reduktionsmitteltank auch aus Edelstahl gefertigt werden.

Des Weiteren könnte zum Beispiel der Kraftstofftank kopfseitig eine Öffnung aufweisen, in die der kleine Reduktionsmitteleinheitstank einfach eingesteckt wird. Ein Verschluss des Einheitstanks zur Aufnahme des Reduktionsmittels könnte wie beim

Kraftstofftank über einen Deckel mit Dichtung und eine große Kunststoffmutter erfolgen. In einer weiteren Ausführungsvariante könnte der Kraftstofftank an seiner geschlossenen Haut eine zylindrische Einwölbung aufweisen, in die der relativ kleine Reduktionsmitteleinheitstank eingesetzt werden kann. Des Weiteren könnte die Außenhaut des Kraftstofftanks bereits den kleiner dimensionierten Einheitstank zur Aufnahme des Reduktionsmittels beinhalten, wodurch beide Tanks kostengünstig wieder im Wege des Kunststoffblasverfahrens hergestellt werden können.

### Kurze Beschreibung der Zeichnungen

Anhand der Zeichnung wird die Erfindung nachstehend eingehender beschrieben.

Es zeigt:
- Figur 1: ein Dosiersystem in einer aus dem Stand der Technik bekannten Ausführungsform,
- Figur 2: einen Schnitt durch einen Einheitstank zur Integration an einer fahrzeugspezifischen Komponente,
- Figur 3: die Integration des Einheitstanks gemäß Figur 2 an einer fahrzeugspezifischen Komponente,
- Figur 4: einen Schnitt durch eine als Kraftstofftank ausgebildete fahrzeugspezifische Komponente mit im Tank aufgenommenem Einheitstank für das Reduktionsmittel,
- Figur 5: den Einheitstank gemäß der Darstellung in Figur 2, eingelassen in die Mulde eines Kraftstofftanks,
- Figur 6: einen in der Tankwand eines Kraftstofftanks ausgebildeten Einheitstank zur Aufnahme des Reduktionsmittels und
- Figur 7: eine Ausführungsvariante der erfindungsgemäß vorgeschlagenen Lösung, wobei der in die fahrzeugspezifische Komponente eingelassene Einheitstank zur Aufnahme des Reduktionsmittels durch rücklaufenden Kraftstoff erwärmt wird.

### Ausführungsformen

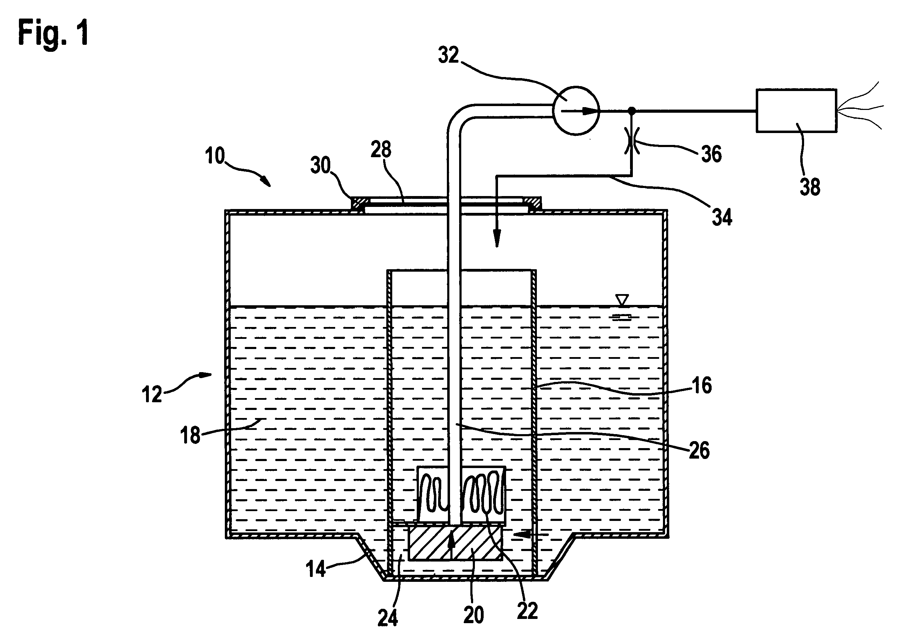

Der Darstellung gemäß Figur 1 ist eine schematische Darstellung eines aus dem Stand der Technik bekannten Eindosierungssystems zur Eindosierung eines Reduktionsmittels in den Abgastrakt einer Verbrennungskraftmaschine zu entnehmen.

Ein Dosiersystem 10 umfasst einen Tank 12, der an seinem Boden eine Mulde 14 aufweist. Im Inneren des Tanks 12 befindet sich ein Schwapptopf 16, um die Schwappbewegungen eines Reduktionsmittels 18 zu begrenzen. Im unteren Bereich des Schwapptopfes 16 ist ein Untertopf 24 vorgesehen, der sich innerhalb der Mulde 14 am Boden des Tanks 12 befindet. In den Untertopf 24 ist ein Heizelement 22 eingelassen. Dieses wird von einer Sauglanze 26 durchsetzt, an deren saugseitigem Ende sich im Bereich des Untertopfes 24 ein Filter 20 befindet. Über diesen Filter 20 wird aus dem Untertopf 24 unterhalb des Schwapptopfes 16 über ein Förderaggregat 32 Reduktionsmittel 18 angesaugt. Die Sauglanze 26 erstreckt sich durch das Heizelement 22, den Schwapptopf 16, durch einen Tankdeckel 28.

In der Leitung der Sauglanze 26 ist das bevorzugt als elektrisch betriebene Pumpe ausgebildete Förderaggregat 32 aufgenommen. Über dieses wird Reduktionsmittel 18 über die Sauglanze 26 einem als Einspritzventil ausgebildeten Dosiermodul 38 zugeleitet. Hinter dem Förderaggregat 32 zweigt ein Rücklauf 34 ab, in dem sich eine Drossel 36 befindet.

Der Tank 12 zur Aufnahme des Reduktionsmittels 18 ist an seiner Oberseite durch einen Deckel 28 verschlossen, der beispielsweise mittels einer Verschraubung 30 am Tank 12 befestigt ist. Über die durch den Deckel 28 verschlossene Öffnung in der Decke des Tanks 12 werden die im Inneren des Tanks 12 befindlichen Komponenten, so zum Beispiel der Schwapptopf 16, das Heizelement 22, der Filter 20, der Untertopf 24 und die Sauglanze 26, im Inneren des das Reduktionsmittel 18 aufnehmenden Tanks 12 montiert.

Bei dem in Figur 1 dargestellten Tank 12 handelt es sich um einen solchen, der ein Volumen von Reduktionsmittel 18 in der Größenordnung von 20 Litern und mehr aufnimmt. Um die Schwappbewegungen des Reduktionsmittels 18 während der Fahrt des Fahrzeugs zu dämmen, ist im Inneren des Tanks 12 gemäß der Darstellung in Figur 1 der Schwapptopf 16 montiert, der hier auf einem Untertopf 24 aufsitzt. Der Untertopf 24 seinerseits ist in einer muldenförmigen Vertiefung 14 am Boden des Tanks 12 angeordnet.

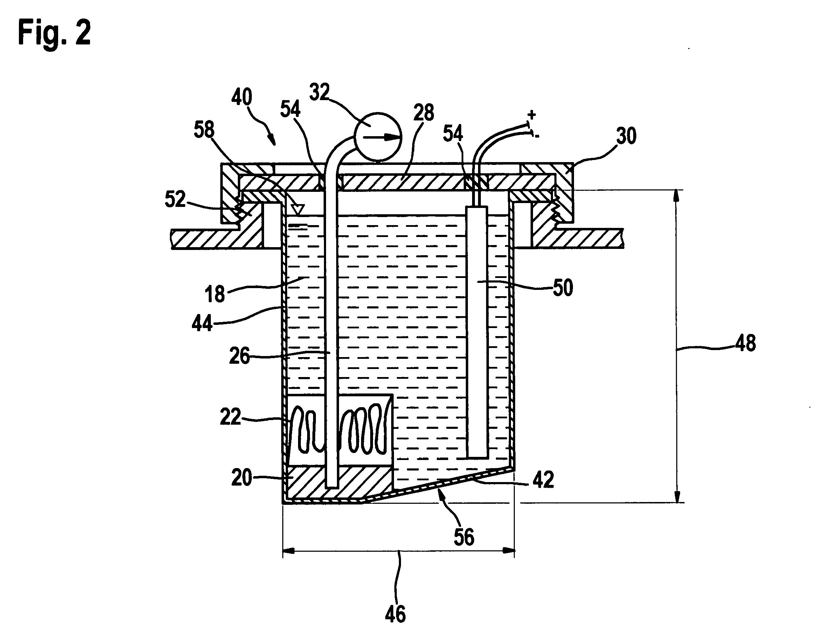

Figur 2 zeigt einen Längsschnitt durch einen Einheitstank zur Aufnahme von Reduktionsmittel.

Der Darstellung gemäß Figur 2 ist ein Einheitstank 40 zu entnehmen, in dem im Unterschied zum Tank 12 gemäß der Darstellung in Figur 1 lediglich ein Volumen in der Größenordnung zwischen 2 Litern und 10 Litern von Reduktionsmittel 18 bevorratet ist. Ein Füllstand des Reduktionsmittels 18 im Inneren des Einheitstanks 40 ist durch Bezugszeichen 58 kenntlich gemacht. Der Einheitstank 40 gemäß der Schnittdarstellung in Figur 2 umfasst einen Tankboden 42 sowie eine Tankwand 44 und kann zum Beispiel zylindrisch ausgebildet sein oder einen rechteckförmigen oder quadratischen Grundriss besitzen. In der Darstellung gemäß Figur 2 handelt es sich um einen Einheitstank 40, der zylindrisch ausgebildet ist, wobei ein Durchmesser des Einheitstanks 40 durch Bezugszeichen 46 angedeutet ist. Eine Länge des Einheitstanks 40, die dessen Durchmesser 46 übersteigt, ist durch Bezugszeichen 48 bezeichnet. In das Innere des Einheitstanks 40 ragt ein Füllstandssensor 50, dessen Kontaktierung über eine im Deckel 28 angeordnete Dichtung 54 nach außen geführt ist. Der Deckel 28 seinerseits ist über eine Verschraubung 30 an einer fahrzeugspezifischen Komponente, bei der es sich zum Beispiel um einen Kraftstofftank 68 handeln kann, befestigt. Bevorzugt ist an der Tankwand 44 am oberen Ende ein Bund ausgebildet, der auf einem Kragen 52 der fahrzeugspezifischen Komponente, wie zum Beispiel einem Kraftstofftank 68, abgestützt ist. Über die Verschraubung 30 lässt sich der Deckel 28 samt Bund an der Tankwand einfach und dicht mit der fahrzeugspezifischen Komponente, zum Beispiel einem Kraftstofftank 68, verbinden. Des Weiteren ragt die Sauglanze 26 in das Innere des Einheitstanks 40 hinein. Die Sauglanze 26, die sich im Wesentlichen in vertikale Richtung durch das im Einheitstank 44 bevorratete Reduktionsmittel 18 erstreckt, ist ebenfalls über eine Dichtung 54 im Deckel 28 abgedichtet. Das Förderaggregat, über welches die Sauglanze 26 beaufschlagt wird, ist in der Darstellung gemäß Figur 2 lediglich durch den Pfeil angedeutet und in der Darstellung gemäß Figur 2 nicht gezeigt.

Am unteren Bereich der Sauglanze 26 befindet sich das Heizelement 22, unterhalb dem wiederum ein Filter 20 angeordnet ist.

Wie der Schnittdarstellung gemäß Figur 2 zu entnehmen ist, verläuft der Tankboden 42 des Einheitstanks 40 in einem Prägungswinkel, so dass eine Schräge 56 entsteht, durch die bedingt, stets sichergestellt ist, dass bei sich leerendem Tank der Filter 20 so lange wie möglich von Reduktionsmittel 18 benetzt ist. In vorteilhafter Weise kann der Filter 20 bzw. die dem Tankboden 42 zuweisende Stirnseite des Filters 20 an die Kontur der Schräge 56 angepasst sein.

Der in der Darstellung gemäß Figur 2 dargestellte Einheitstank 40 kann aufgrund seiner reduzierten Größe über ein kostengünstiges Kunststoffspritzgießverfahren oder auch im Kunststoffschleuderverfahren hergestellt werden. Des Weiteren kann aufgrund der reduzierten Größe des erfindungsgemäß vorgeschlagenen Einheitstanks 40 zur Integration in oder an einer fahrzeugspezifischen Komponente der Schwappbewegungen des Reduktionsmittels 18 hemmende Schwapptopf 16, vergleiche Darstellung gemäß der Figur 1, entfallen. Dadurch lassen sich einheitliche Komponenten zur Integration in ein Dosiersystem 10 bereitstellen, ferner sind nunmehr keine Maßnahmen gegen Schwappen des Reduktionsmittels 18 im Einheitstank 40 mehr vorzusehen.

Der in Figur 2 dargestellte Einheitstank 40 kann außer aus Kunststoffmaterial im Wege der oben genannten Herstellungsverfahren auch aus Edelstahl gefertigt werden.

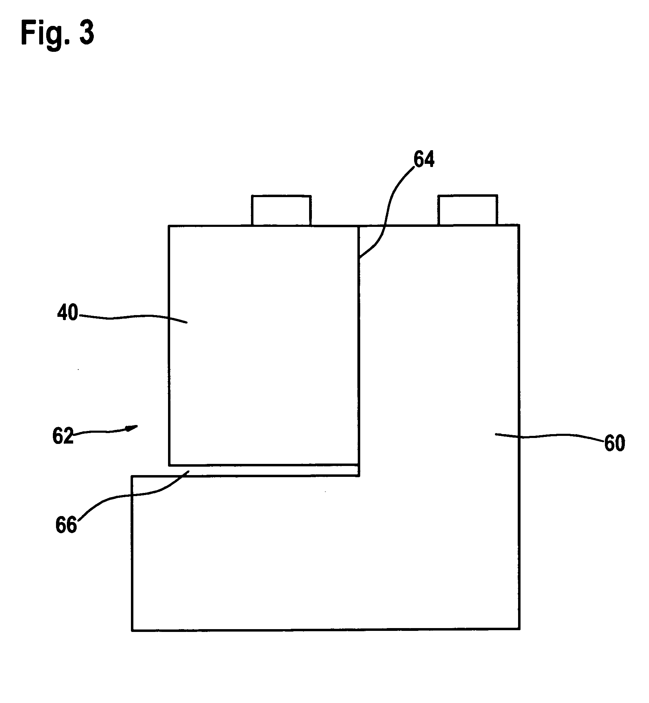

Aus der Darstellung gemäß Figur 3 geht hervor, dass der als Einheitstank ausgeführte Tank zur Bevorratung des Reduktionsmittels 18 in eine fahrzeugspezifische Komponente 60 integriert ist. Bei der fahrzeugspezifischen Komponente 60 kann es sich um einen ein Medium bevorratenden Tank, so zum Beispiel den Kraftstofftank des Fahrzeugs oder einen Waschwassertank oder dergleichen handeln. Figur 3 zeigt, dass der Einheitstank 40 in einen Freiraum 62 der fahrzeugspezifischen Komponente 60 integriert ist. Aus der schematischen Darstellung gemäß Figur 3 geht hervor, dass der Freiraum 62 durch eine Begrenzungswand 64, die gleichzeitig eine Begrenzungswand der fahrzeugspezifischen Komponente 60 darstellt, sowie einen Boden 66 begrenzt ist. Je nach Geometrie des Einheitstanks 40 ist der Freiraum 62 an der fahrzeugspezifischen Komponente 60, sei es ein Waschwassertank, sei es der Kraftstofftank des Fahrzeugs, ausgebildet. In besonders vorteilhafter Weise bietet sich an, den Einheitstank 40 in den Kraftstofftank 68 als fahrzeugspezifische Komponente 60 zu integrieren, sei es in diesen einzubauen oder in diesem einzuformen oder dergleichen. Mit einer weitergehenden Kraftstoffverbrauchsreduzierung an Fahrzeugen nimmt demzufolge das Volumen von Kraftstoff, welches im Kraftstofftank 68 zu bevorraten ist, ab, so dass Bauraum für den Einheitstank 40 zur Bevorratung des Reduktionsmittels entsteht. Erfindungsgemäß ist vorgesehen, dass das Volumen von Reduktionsmittel 18, welches im Einheitstank 40 bevorratet wird, in der Größenordnung zwischen 2 Litern und 10 Litern liegt.

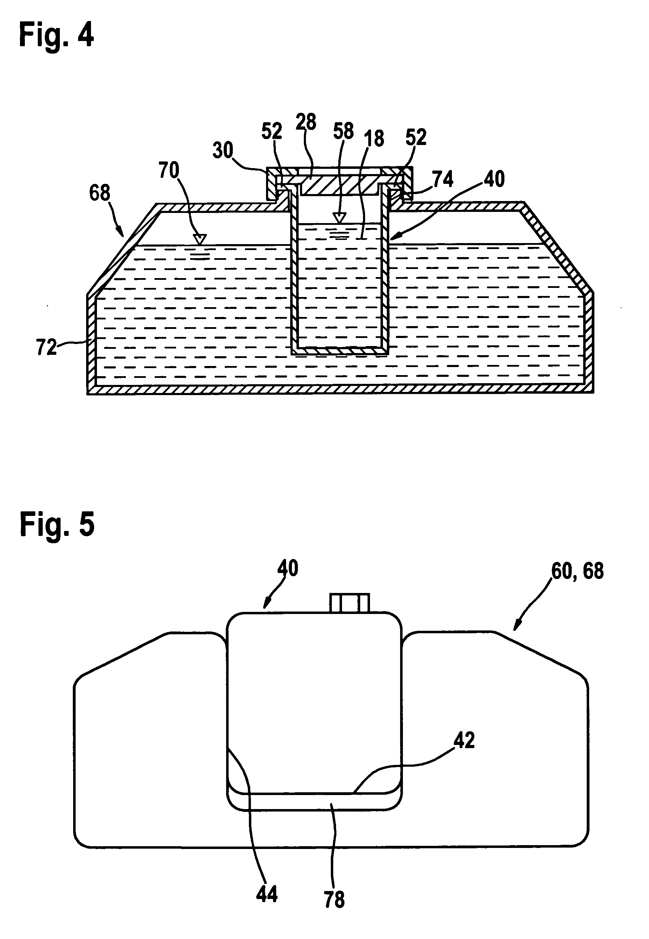

Aus der Darstellung gemäß Figur 4 geht eine Integration eines Einheitstanks in eine fahrzeugspezifische Komponente - hier ein Kraftstofftank - hervor.

Figur 4 zeigt, dass in einer Wand 72 eines Kraftstofftanks 68, welcher in diesem Zusammenhang die fahrzeugspezifische Komponente 60 darstellt, ein Kragen 52 ausgebildet ist. Auf dem Kragen 52 ruht ein Bund, der in der Wand 44 des Einheitstanks 40 ausgebildet ist. Der Bund wird auf dem Kragen 52 zum Beispiel über eine Verschraubung 30 befestigt. Damit ist eine Öffnung 74 an der oberen Tankdecke des Kraftstofftanks 68 verschlossen. Figur 4 zeigt, der Einheitstank 40 im Kraftstofftank 68 fixiert ist und allseitig in Bezug auf seinen Boden bzw. auf seine Tankwand von Kraftstoff umgeben ist. Der Kraftstoffpegel, der im Inneren des Kraftstofftanks 68 vorliegt, ist durch Bezugszeichen 70 bezeichnet. Die Einbauten, wie zum Beispiel der in Figur 2 dargestellte Füllstandssensor 50 bzw. die Sauglanze 26 zur Förderung des Reduktionsmittels aus dem Inneren des Einheitstanks 40, sind in der Darstellung gemäß Figur 4 nicht dargestellt.

Bei der in Figur 4 dargestellten Lösung wird der Einheitstank 40 einfach in die Öffnung 74 an der Oberseite des Kraftstofftanks 68 eingesteckt und durch die Verschraubung 30 fixiert. Bei der Verschraubung 30 kann es sich zum Beispiel um einen Deckel mit Gummidichtung mit großer Kunststoffmutter handeln. Durch Bezugszeichen 58 ist der Füllstand von Reduktionsmittel 18 im Inneren des Einheitstanks 40 angedeutet.

In einer der Figur 5 entnehmbaren Konstruktion weist der Kraftstofftank 68, der hier beispielsweise als fahrzeugspezifische Komponente 60 dargestellt ist, eine Mulde 78 auf, die zum Beispiel als zylindrische Einwölbung oder dergleichen ausgeführt sein kann. In diese Mulde 78 wird der als Einheitstank 40 ausgebildete Tank zur Aufnahme des Reduktionsmittels 18 eingesetzt und fixiert. Es sind sowohl die Tankwand 44 als auch der Tankboden 42 von angrenzenden Begrenzungswänden des Kraftstofftanks 68 umschlossen. Die Geometrie der Mulde 78 im Kraftstofftank 68 richtet sich nach der Geometrie des Einheitstanks 40. Dieser ist bevorzugt so ausgelegt, dass seine Höhe, vergleiche Länge 48 des Einheitstanks 40, seinen Durchmesser 46, vergleiche Darstellung gemäß Figur 2, übersteigt.

Wenngleich in der Darstellung gemäß Figur 5 nicht dargestellt, wird der Tankboden 42 des Einheitstanks 40 bevorzugt in einer Schräge verlaufend ausgebildet, wie in Zusammenhang mit Figur 2 bereits dargestellt.

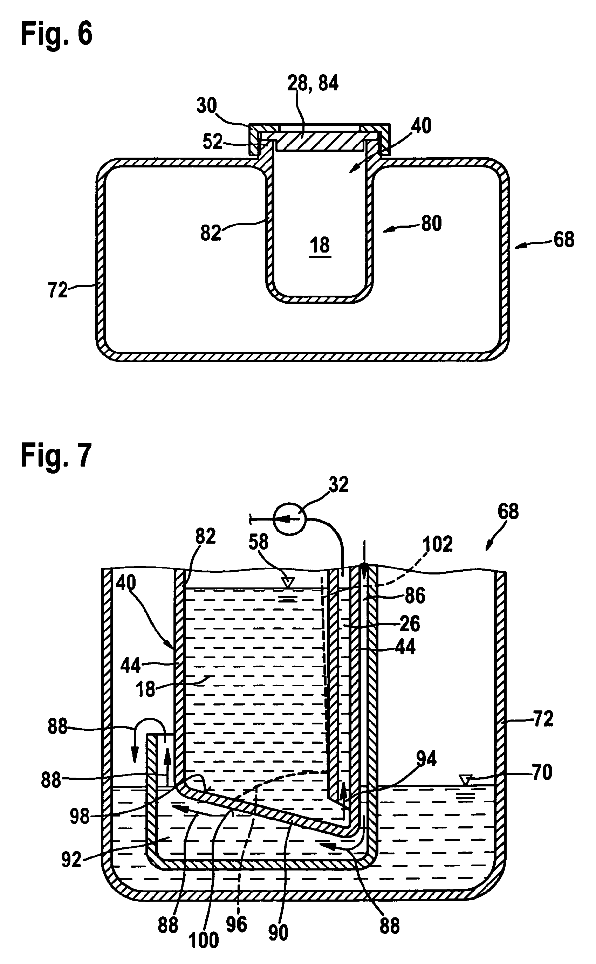

In Figur 6 ist in schematischer Weise eine weitere Konstruktion dargestellt.

Bei der Lösung gemäß Figur 6 handelt es sich um eine ebenfalls als Kraftstofftank 68 ausgebildete fahrzeugspezifische Komponente 60, bei der in der Außenhaut bzw. Wand 72 des Kraftstofftanks 68 bereits ein Tank als eingeformter Einheitstank 80 ausgebildet ist. Das Innere des eingeformten Einheitstanks 80 bzw. das in diesem bevorratete Reduktionsmittel 18 wird durch eine Trennwand 82 vom Inhalt des Kraftstofftanks 68 getrennt. Die Trennwand 82 stellt bei einem im Wege des Kunststoffblasverfahrens hergestellten Kraftstofftank 68 einen Teil von dessen äußerer Begrenzungswand 72 dar. Die Öffnung des eingeformten Einheitstanks 80 ist durch einen Deckel 28 bzw. ein Verschlussteil 84 verschlossen, welches mittels einer Verschraubung 30 oder dergleichen dichtend verschließbar ist.

Wenn auch in der in Figur 6 dargestellten Konstruktion nicht explizit in der Zeichnung dargestellt, verlaufen durch den Deckel 28 bzw. das Verschlussteil 84 die elektrischen Kontaktierungen für den Füllstandssensor 50, vergleiche Darstellung gemäß Figur 2, sowie die Sauglanze 26, die sich zum Förderaggregat 32 einerseits und andererseits in den Hohlraum des Einheitstanks 40 erstreckt.

Figur 7 zeigt eine Ausführungsvariante der erfindungsgemäß vorgeschlagenen Lösung, bei der das im Einheitstank bevorratete Reduktionsmittel über rücklaufenden Kraftstoff erwärmt ist.

Bei der in Figur 7 dargestellten Ausführungsvariante der erfindungsgemäß vorgeschlagenen Lösung ist der Einheitstank 40 in die fahrzeugspezifische Komponente 60, insbesondere den Kraftstofftank 68 des Fahrzeugs eingelassen. Dabei ist unerheblich, ob der Einheitstank 40 als Einsteckteil in eine Öffnung 74 des Kraftstofftanks 68, wie in Figur 4 dargestellt, eingesetzt ist, oder ob der Einheitstank als eingeformter Einheitstank 80, d.h. in der Wand 72 des Kraftstofftanks 68 selbst ausgebildet ist.

Von Bedeutung bei der Lösung bei der Ausführungsvariante gemäß Figur 7 ist der Umstand, dass bei dieser Ausführungsvariante auf den Einsatz eines separaten Heizelementes 22, wie in der Ausführungsvariante gemäß Figur 2 dargestellt, verzichtet werden kann. Dies hat seine Ursache darin, dass das Reduktionsmittel 18, was im Einheitstank 40 bzw. im eingeformten Einheitstank 80 bevorratet wird, durch rücklaufenden Kraftstoff erwärmt wird. Beim Einspritzen von Kraftstoff in die Brennräume der Verbrennungskraftmaschine entsteht Leckagemenge bzw. Rücklaufmenge, die über einen in der Ausführungsvariante gemäß Figur 7 mit Bezugszeichen 86 bezeichneten Rücklauf von den Kraftstoffinjektoren in den Kraftstofftank 68 zurückbefördert wird. Diese Rücklaufmenge von Kraftstoff weist eine relativ hohe Temperatur auf, die dazu ausgenutzt werden kann, das im Einheitstank 40 bzw. im eingeformten Einheitstank 80 bevorratete Reduktionsmittel 18 zu erwärmen, ohne dass es eines separaten Heizelementes 22 und der dazu erforderlichen aufwändigen Steuerung bedarf. Der erfindungsgemäß vorgeschlagenen Lösung folgend, ist gemäß Figur 7 der Rücklauf 86 für den Kraftstoff so gestaltet, dass dieser z.B. im Wege des Kunststoffspritzgießverfahrens unmittelbar in den Einheitstank 40 bzw. den eingeformten Einheitstank 80 angespritzt ist.

Bevorzugt verläuft der Rücklauf 86 vom Kraftstoffeinspritzsystem der Verbrennungskraftmaschine parallel zur Sauglanze 26, über die das Reduktionsmittel 18 aus dem Einheitstank 40 bzw. dem eingeformten Einheitstank 80 zum Förderaggregat 32, welches bevorzugt als elektrische Pumpe ausgebildet ist, strömt.

Durch die aus Figur 7 hervorgehende Ausführungsvariante kann erreicht werden, dass der zurückströmende Kraftstoff, der den Rücklauf 86 passiert, gleichzeitig die Sauglanze 26, die sich parallel zu diesem im Wesentlichen in vertikale Richtung orientiert erstreckt, und das durch diese geförderte Reduktionsmittel 18 erwärmt. Wie aus der Darstellung gemäß Figur 7 hervorgeht, sind der Rücklauf 86 und die Sauglanze 26 durch die Tankwand 44 des Einheitstanks 40 bzw. des eingeformten Einheitstanks 80 voneinander getrennt. Bevorzugt ist der Einheitstank 40 bzw. der eingeformte Einheitstank 80 so beschaffen, dass dieser eine Bodenschräge 90 aufweist. Oberhalb der tiefsten Stelle der Bodenschräge 90 erstreckt sich ein Sieb 96, über welches das Eintreten von Partikeln in die Sauglanze 26 und deren Ansaugen durch das Förderaggregat 32 unterbunden wird. Unterhalb des Siebes 96 oberhalb der Innenseite 98 der Bodenschräge 90 befindet sich eine Eintrittsöffnung 94 in die Sauglanze 26. Die Eintrittsöffnung 94 in die Sauglanze 26 befindet sich bevorzugt oberhalb der tiefsten Stelle an der Innenseite 98 der Bodenschräge 90. Die Bodenschräge 90 ist andererseits mit ihrer Außenseite 100 der Auffangwanne 92 zugewandt, in welcher der ein erhöhtes Temperaturniveau aufweisende, über den Rücklauf 86 in die Bodenwanne 92 eintretende Kraftstoff gesammelt wird. Gemäß einer Strömungsrichtung 88 des zurücklaufenden Kraftstoffes wird in der Bodenwanne 92 der durch den Rücklauf 86 in diese eintretende Kraftstoff gesammelt, bevor dieser an einer Austrittsöffnung in Strömungsrichtung 88 in den Kraftstofftank 86 einströmt. Der besondere Vorteil der in Figur 7 dargestellten Ausführungsvariante der erfindungsgemäß vorgeschlagenen Lösung ist darin zu sehen, dass der mit erhöhter Temperatur über den Rücklauf 86 in die Auffangwanne 92 eintretende Kraftstoff einerseits die axiale Länge der Sauglanze 26 beheizt und andererseits über die Bodenschräge 90 Wärme an das Reduktionsmittel 18 abgibt, welches im Einheitstank 40 bzw. im eingeformten Einheitstank 80 bevorratet ist. Je nach Wahl des Kunststoffmaterials bzw. des Edelstahlmaterials, aus welchem der Einheitstank 40 bzw. der eingeformte Einheitstank 80 gefertigt ist, stellt sich ein besonders guter Wärmeübergang zwischen dem erwärmten Kraftstoff und dem Reduktionsmittel 18 ein. Dies bedeutet, dass bei der in Figur 7 dargestellten Ausführungsvariante der erfindungsgemäß vorgeschlagenen Lösung auf ein separates Heizelement 22 sowie dessen Ansteuerungsmimik vollständig verzichtet werden kann.

In besonders vorteilhafter Weise verläuft gemäß der Ausführungsvariante in Figur 7 die Sauglanze 26 in unmittelbarer Nähe des erwärmten Kraftstoff führenden Rücklaufes 86. Idealerweise sind sowohl die Sauglanze 26 bzw. der Rücklauf 86 für den erwärmten Kraftstoff bereits beide im Einheitstank 40 bzw. im eingeformten Einheitstank 80 im Wege des Kunststoffspritzgießverfahrens mit eingespritzt. Somit wird einerseits die Sauglanze 26 erwärmt bzw. aufgetaut, und andererseits bildet sich an der Tankwand 44 des Einheitstanks 40 bzw. des eingeformten Einheitstanks 80 ein für die Absaugung erforderlicher Luftpfad 102 zwischen der Ansaugstelle, d.h. der Eintrittsöffnung 94 in die Sauglanze 26 einerseits und einem Luftraum über einem durchgefrorenen Reduktionsmittel 18.

Bei sämtlichen in den Figuren 4, 5 und 6 dargestellten Ausführungsvarianten ist eine Beheizung des Reduktionsmittels 18 über den Rücklauf 86, der erwärmtes, von dem Kraftstoffeinspritzsystem abgesteuertes Kraftstoffvolumen führt, möglich. Eine besonders günstige Ausführung liegt in der Variante gemäß Figur 4, da diese Ausführungsvariante erst erlaubt, den Einheitstank 40, sei es mit Förderaggregat 32 auf dem Deckel 28 oder als abgesetztes Fördermodul im Kraftstofftank 68 zu montieren.

Durch den Ersatz des elektrischen Heizelementes 22 durch eine hydraulische, über den erwärmten Kraftstoff führenden Rücklauf 86 erfolgende hydraulische Heizung wird das elektrische Heizelement 22 samt der aufwändigen Überwachung entfallen, wodurch eine nicht unerhebliche Kostenreduzierung für ein Dosiersystem 10 zur Eindosierung von Harnstoff bzw. einer wässrigen Harnstofflösung in das Abgas einer Brennkraftmaschine erreicht werden kann.

In besonders vorteilhafter Ausführungsmöglichkeit der erfindungsgemäß vorgeschlagenen Lösung kann der sich im Wesentlichen in vertikaler Richtung erstreckende Füllstandssensor 50 als Einheitsbauteil eingesetzt werden, der standardmäßig in einen jeden der erfindungsgemäß vorgeschlagenen Einheitstanks 40 bzw. den erfindungsgemäß vorgeschlagenen, in eine fahrzeugspezifische Komponente 60, wie z.B. einen Kraftstofftank 68, integrierten Tank eingebaut werden kann.

In Weiterbildung des der Erfindung zugrunde liegenden Gedankens kann der Rücklauf 86 vom Einspritzsystem der Verbrennungskraftmaschine so verlaufen, dass der Rücklauf 86, über den erwärmter Kraftstoff vom Einspritzsystem der Verbrennungskraftmaschine in den Kraftstofftank 68 zurückgefördert wird, mit erwärmtem Kraftstoff das im Regelfall als elektrische Pumpe beschaffene Förderaggregat 32 beheizt. Damit entfällt zum einen ein separates Heizelement für das Förderaggregat 32, bei dem es sich im Regelfall um eine elektrisch betriebene Pumpe handelt, zum anderen kann durch eine geeignete Führung des Rücklaufes 86 zur Förderung des erwärmten Kraftstoffes in den Kraftstofftank 68 erreicht werden, dass neben dem Förderaggregat 32 auch die Verbindungsleitung zwischen dem Dosiermodul 38 und dem Förderaggregat 32 einerseits und andererseits der saugseitig vor dem Förderaggregat 32 liegende Bereich der Sauglanze 26 beheizt werden kann. Dies vermeidet das Vorsehen eines zusätzlichen Heizelementes, so z.B. eine Heizspirale oder dergleichen, im Bereich der Sauglanze 26, des Förderaggregates 32 bzw. zwischen der Leitung vom druckseitigen Ende des Förderaggregates 32 zum Fördermodul 38.

## Patentansprüche

1. Dosiersystem (10) zum Einbringen eines Reduktionsmittels (18), insbesondere Harnstoff oder eine wässrige Harnstofflösung, in den Abgastrakt einer Verbrennungskraftmaschine mit einem Tank (12, 14) zur Bevorratung des Reduktionsmittels (18), einem Förderaggregat (32), einem Füllstandsensor (50) und einem Dosiermodul (38), wobei der Tank (40) ein Einheitstank ist, der in einen Kraftstofftank (68) integriert ist, **dadurch gekennzeichnet, dass** das Reduktionsmittel (18), das im Einheitstank (40) bevorratet ist, durch erwärmten in den Kraftstofftank (68) zurückströmenden Kraftstoff beheizt ist und zurückströmender Kraftstoff an der Wand (44) des Einheitstanks (40) entlangströmt und sich unterhalb des Einheitstanks (40, 80) in einer Auffangwanne (92) ansammelt.

2. Dosiersystem (10) gemäß Anspruch 1, **dadurch gekennzeichnet, dass** der Einheitstank (40) ein Volumen von Reduktionsmittel (18) zwischen 2 Litern und 10 Litern bevorratet.

3. Dosiersystem (10) gemäß Anspruch 1, **dadurch gekennzeichnet, dass** der Einheitstank (40) in eine Öffnung (74) der fahrzeugspezifischen Komponente (60) eingelassen und in dieser fixiert sowie abgedichtet ist.

4. Dosiersystem (10) gemäß Anspruch 1, **dadurch gekennzeichnet, dass** der Einheitstank (40) in einer Mulde (78) des Kraftstofftankes (68) aufgenommen ist.

5. Dosiersystem (10) gemäß Anspruch 1, **dadurch gekennzeichnet, dass** der Einheitstank (40) ein in den Kraftstofftank (68) eingeformter Einheitstank (80) ist.

6. Dosiersystem (10) gemäß Anspruch 5, **dadurch gekennzeichnet, dass** der eingeformte Einheitstank (80) durch eine Begrenzungswand (82) vom Medium, welches in dem Kraftstofftank bevorratet wird, getrennt ist und die Begrenzungswand (82) Teil einer Wand (72) des Kraftstofftanks (68) ist ,

7. Dosiersystem (10) gemäß Anspruch 1, **dadurch gekennzeichnet, dass** das Förderaggregat (32) durch den im Rücklauf (86) in den Kraftstofftank (68) zurückströmenden, erwärmten Kraftstoff beheizt ist.

8. Dosiersystem (10) gemäß Anspruch 1, **dadurch gekennzeichnet, dass** die Sauglanze (26) zur Förderung von Reduktionsmittel (18) durch den erwärmten Kraftstoff führenden Rücklauf (86) für Kraftstoff beheizt ist.

9. Dosiersystem (10) gemäß Anspruch 1, **dadurch gekennzeichnet, dass** eine Eintrittsöffnung (94) der Sauglanze (26) oberhalb einer tiefsten Stelle einer Bodenschräge (90) des Einheitstanks (40) oder des eingeformten Einheitstanks (80) liegt.

10. Dosiersystem (10) gemäß Anspruch 2, **dadurch gekennzeichnet, dass** der Einheitstank (40) ein Heizelement enthält.

## Claims

1. Dosing system (10) for introducing a reducing agent (18), in particular urea or an aqueous urea solution, into the exhaust tract of an internal combustion engine, having a tank (12, 14) for storing the reducing agent (18), having a delivery unit (32), having a fill level sensor (50), and having a dosing module (38), wherein the tank (40) is a standard tank which is integrated into a fuel tank (68), **characterized in that** the reducing agent (18) which is stored in the standard tank (40) is heated by warmed fuel flowing back into the fuel tank (68), and fuel flowing back flows along the wall (44) of the standard tank (40) and collects below the standard tank (40, 80) in a collecting sump (92).

2. Dosing system (10) according to Claim 1, **characterized in that** the standard tank (40) stores a volume of reducing agent (18) of between 2 litres and 10 litres.

3. Dosing system (10) according to Claim 1, **characterized in that** the standard tank (40) is set into an opening (74) of the vehicle-specific component (60) and is fixed and sealed off therein.

4. Dosing system (10) according to Claim 1, **characterized in that** the standard tank (40) is received in a depression (78) of the fuel tank (68).

5. Dosing system (10) according to Claim 1, **characterized in that** the standard tank (40) is a standard tank (80) which is formed integrally in the fuel tank (68).

6. Dosing system (10) according to Claim 5, **characterized in that** the integrally formed standard tank (80) is separated from the medium stored in the fuel tank by a delimiting wall (82), and the delimiting wall (82) is part of a wall (72) of the fuel tank (68).

7. Dosing system (10) according to Claim 1, **characterized in that** the delivery unit (32) is heated by warmed fuel which flows back in the return line (86) into the fuel tank (68).

8. Dosing system (10) according to Claim 1, **characterized in that** the suction lance (26) for the delivery of reducing agent (18) is heated by the fuel return line (86) which conducts warmed fuel.

9. Dosing system (10) according to Claim 1, **characterized in that** an inlet opening (94) of the suction lance (26) is situated above a lowest point of a base slope (90) of the standard tank (40) or of the integrally formed standard tank (80).

10. Dosing system (10) according to Claim 2, **characterized in that** the standard tank (40) comprises a heating element.

## Revendications

1. Système de dosage (10) pour introduire un agent réducteur (18), en particulier de l'urée ou une solution aqueuse d'urée, dans le système d'échappement d'un moteur à combustion interne, comprenant un réservoir (12, 14) pour le stockage de l'agent réducteur (18), une unité de refoulement (32), un capteur de niveau (50) et un module de dosage (38), le réservoir (40) étant un réservoir unitaire qui est intégré dans un réservoir de carburant (68), **caractérisé en ce que** l'agent réducteur (18) qui est stocké dans le réservoir unitaire (40) est chauffé par du carburant réchauffé retournant au réservoir de carburant (68) et du carburant retournant s'écoule le long de la paroi (44) du réservoir unitaire (40) et s'accumule dans un bac collecteur (92) en dessous du réservoir unitaire (40, 80).

2. Système de dosage (10) selon la revendication 1, **caractérisé en ce que** le réservoir unitaire (40) stocke un volume d'agent réducteur (18) compris entre 2 litres et 10 litres.

3. Système de dosage (10) selon la revendication 1, **caractérisé en ce que** le réservoir unitaire (40) est inséré dans une ouverture (74) du composant (60) spécifique au véhicule et est fixé ainsi qu'étanché dans celui-ci.

4. Système de dosage (10) selon la revendication 1, **caractérisé en ce que** le réservoir unitaire (40) est reçu dans une cavité (78) du réservoir de carburant (68).

5. Système de dosage (10) selon la revendication 1, **caractérisé en ce que** le réservoir unitaire (40) est un réservoir unitaire (80) moulé dans le réservoir de carburant (68).

6. Système de dosage (10) selon la revendication 5, **caractérisé en ce que** le réservoir unitaire moulé (80) est séparé, par une paroi de délimitation (82), du milieu qui est stocké dans le réservoir de carburant et la paroi de délimitation (82) fait partie d'une paroi (72) du réservoir de carburant (68).

7. Système de dosage (10) selon la revendication 1, **caractérisé en ce que** l'unité de refoulement (32) est chauffée par le carburant réchauffé retournant dans le retour (86) au réservoir de carburant (68).

8. Système de dosage (10) selon la revendication 1, **caractérisé en ce que** la lance d'aspiration (26) pour refouler l'agent réducteur (18) est chauffée par le retour (86) conduisant le carburant réchauffé.

9. Système de dosage (10) selon la revendication 1, **caractérisé en ce qu'**une ouverture d'entrée (94) de la lance d'aspiration (26) se situe au-dessus d'un point le plus bas d'une inclinaison du fond (90) du réservoir unitaire (40) ou du réservoir unitaire moulé (80).

10. Système de dosage (10) selon la revendication 2, **caractérisé en ce que** le réservoir unitaire (40) contient un élément chauffant.
